# EUROPÄISCHE PATENTSCHRIFT

(11) **EP 4 040 117 B1**
(45) Veröffentlichungstag und Bekanntmachung des Hinweises auf die Patenterteilung: **26.04.2023**
(21) Anmeldenummer: 21155504.0
(22) Anmeldetag: 05.02.2021
(51) Int. Cl.: G01F 23/26, G01F 23/284, G01L 19/12

(54) **MESSGERÄT MIT FLEXIBLER BEFESTIGUNGSEINRICHTUNG**
MEASURING DEVICE WITH FLEXIBLE FASTENING DEVICE
APPAREIL DE MESURE POURVU DE DISPOSITIF DE FIXATION SOUPLE

(43) Veröffentlichungstag der Anmeldung: 10.08.2022
(73) Patentinhaber: VEGA Grieshaber KG, 77709 Wolfach (DE)
(72) Erfinder: HENGSTLER, Clemens, 77716 Haslach (DE); HUMMEL, Jakob, 79215 Elzach (DE); DIETERLE, Marcel, 77761 Schiltach (DE); SCHMIDT, Matthias, 78136 Schonach (DE); SECKINGER, Timo, 78733 Aichhalden (DE)
(74) Vertreter: Maiwald GmbH

(56) Entgegenhaltungen:
- EP-A1- 3 385 682
- CN-A- 101 762 305
- CN-A- 111 141 364
- CN-B- 103 323 078
- JP-A- H1 151 745
- US-A1- 2001 000 851

## Beschreibung

### Gebiet der Erfindung

Die Erfindung betrifft ein Messgerät, eingerichtet für eine Füllstandmessung, eine Grenzstandmessung oder eine Druckmessung in einem Behälter, die Verwendung des Messgeräts zur Füllstandmessung, Grenzstandmessung oder Druckmessung in einem Behälter und die Verwendung eines Messgeräts für ein Bestandsmanagement eines Behälters in einer Prozessanlage.

### Technischer Hintergrund

Messsensoren werden häufig mittels einer geeigneten Verbindungstechnik an einem Messobjekt bzw. einem Behälter befestigt, um eine Messgröße wie z.B. den Füllstand, den Grenzstand, den Druck oder die Temperatur innerhalb des Behälters zu messen. Eine solche Verbindungstechnik für die Messsensoren kann beispielsweise Löten, Kleben, Schweißen, Klebemontage oder eine Flanschverbindung an einer Öffnung des Behälters umfassen.

US 2001/000851 A1 beschreibt einen Füllstandsensor zur Füllstandmessung einer Flüssigkeit oder einer Pulver- oder Partikelansammlung anhand der unterschiedlichen Dielektrizitätskonstante der verschiedenen Materialien.

CN 111 141 364 A beschreibt ein Füllstandmessgerät für ein Waschbecken, das einen Grundkörper aufweist, der am unteren Ende ein Verbindungsrohr zum Installieren eines Messstabs und am oberen Ende eine Montageplatte aufweist. Die Außenfläche der beiden Seiten des Grundkörpers sind mit einer sich nach hinten erstrechenden Saugstruktur versehen.

EP 3 385 682 A1 beschreibt eine Radar-Füllstandmessanordnung in einem Tank mit einer Tankwand, die für ein im Tank gehaltenes Produkt undurchlässig und für Radarsignale durchlässig ist. Die Füllstandmessanordnung umfasst ein Radar-Füllstandmesssensor mit einer Richtantenne und eine Befestigungsvorrichtung, an der der Radar-Füllstandmesssensor derart montiert ist, dass wenn die Befestigungsvorrichtung an der Tankwand befestigt ist, die Richtantenne so positioniert ist, dass die Übertragung von Radarsignalen durch die Tankwand zur Füllstandmessung innerhalb des Tanks ermöglicht wird.

CN 103 323 078 B beschreibt einen Füllstandalarm mit einer Funkfunktion, der einen Grundkörper und eine Steuervorrichtung umfasst, wobei im Grundkörper eine Füllstanderfassungseinheit und eine Alarmeinheit angeordnet sind.

JP H11 51745 A beschreibt einen Füllstandsensor, der mindestens zwei parallel angeordneten variablen Kondensatoren aufweist, die aus drei oder mehr langen, leitfähigen linien- oder stabförmigen Körpern bestehen.

CN 101 762 305 A beschreibt eine externe Füllstandalarmvorrichtung mit einem Ultraschallsensor, die einen Audiowandler, einen D/A-Wandler, ein Mikrofon, einen A/D-Wandler, einen Mikroprozessor, eine Alarmschaltung und eine Adsorptionsvorrichtung aufweist.

### Zusammenfassung

Es ist eine Aufgabe der vorliegenden Erfindung, eine alternative Befestigung von Messgeräten anzugeben.

Diese Aufgabe wird durch die Merkmale des unabhängigen Patentanspruchs gelöst. Weiterbildungen der Erfindung ergeben sich aus den abhängigen Patentansprüchen und der folgenden Beschreibung von Ausführungsformen.

Ein erster Aspekt der vorliegenden Offenbarung betrifft gemäß Anspruch 1 ein Messgerät, das für eine
Füllstandmessung, eine Grenzstandmessung oder eine Druckmessung in einem Behälter eingerichtet ist und einen Sensor, der zum Erfassen eines Messwertes eingerichtet ist, und eine Befestigungseinrichtung, an der der Sensor angeordnet und/oder befestigt ist, umfasst. Die Befestigungseinrichtung ist dazu eingerichtet, den Sensor lösbar an einer ebenen Fläche einer Behälterwand anzubringen.

Gemäß einer weiteren Ausführungsform ist die Befestigungseinrichtung dazu eingerichtet, den Sensor lösbar an einer ebenen Fläche der Behälterwand anzubringen, die keine Öffnung, Aussparung oder Einbuchtung zum Eingriff durch die Befestigungseinrichtung aufweist.

Ohne das Vorsehen der Öffnung, der Aussparung oder Einbuchtung an der Behälterwand kann das Messgerät schnell und flexibel an dem Behälter angebracht werden, weil zumindest keine Anpassung des Messsensors an die Öffnung bei der Installation des Messgeräts an dem Behälter erforderlich ist.

Im Vergleich zu der Befestigung mittels eines weiteren Befestigungsmittels, wie z.B. einer Klebemontage, kann die Befestigungseinrichtung dazu eingerichtet sein, den Sensor nach dem Gebrauch rückstandsfrei von der ebenen oder gewölbten Fläche der Behälterwand wieder zu entfernen. Somit kann es möglich sein, dass der Sensor an einer weiteren ebenen Fläche der Behälterwand oder gegebenenfalls wiederholt an der gleichen ebenen Fläche der Behälterwand angebracht werden kann.

Gemäß einer weiteren Ausführungsform ist der Sensor ein kapazitiver Sensor oder ein Impedanzsensor.

Während der kapazitive Sensor nach dem kapazitiven Messverfahren arbeiten kann, kann der Impedanzsensor zur Detektion einer Impedanzspektroskopie eingerichtet sein.

Gemäß einer weiteren Ausführungsform weist der kapazitive Sensor zumindest eine Messelektrodenanordnung mit Elektroden auf. Die Elektroden der zumindest einen Messelektrodenanordnung des kapazitiven Sensors ist voneinander beabstandet angeordnet.

Beispielsweise kann der kapazitive Sensor drei oder mehr Elektroden aufweisen, die jeweils als ein offener Kondensator nebeneinander mit einem vorgegebenen Abstand zueinander angeordnet sein. Zwischen den Elektroden kann zumindest ein kapazitives Messfeld oder Wirkfeld erzeugt werden, um die Messgröße oder den Messwert, nämlich den Füllstand, den Grenzstand oder den Druckstand, zu erfassen.

Alternativ kann der kapazitive Sensor beispielsweise eine GND-Elektrode in der Mitte zwischen zwei Messelektroden angeordnet sein und als eine gemeinsame Grundelektrode für die zwei benachbarten Messelektroden ausgebildet sein. In diesem Fall können zwei kapazitive Messfelder erzeugt werden. Tritt beispielsweise ein Medium oder ein Füllgut des Behälters in die zwei kapazitiven Messfelder durch die Änderung des Füllstands des Mediums ein, kann sich die Kapazität der Messfelder verändern und anhand der ermittelten Änderung der Füllstand ausgewertet werden.

Gemäß einer weiteren Ausführungsform weist der kapazitive Sensor weiterhin zumindest eine Schirmelektrode auf, die zwischen zwei benachbarten Elektroden der zumindest einen Messelektrodenanordnung angeordnet ist.

Die Schirmelektrode kann zwischen zwei benachbarten Elektroden vorgesehen sein. Durch das Vorsehen der zumindest einen Schirmelektrode kann der kapazitive Sensor beispielsweise von Einflüssen auf die Messergebnisse durch eine äußere Störung befreit oder zumindest verhindert werden.

Der Sensor kann weiterhin eine Elektronik und eine Funkeinheit aufweisen. Die Funkeinheit kann dazu eingerichtet sein, den Messwert bzw. die Messwerte mittels eines Funksignals drahtlos an einen externen Empfänger, wie z. B. ein Computer, ein Datenzentrum oder ein Cloud-System zu senden oder übertragen. Die Elektronik kann dazu eingerichtet sein, die zumindest eine Messelektrodenanordnung, die Funkeinheit und die interne Energieversorgung zu steuern.

Gemäß einer weiteren Ausführungsform ist der Sensor eine Reflexions-Mikrowellenschranke.

Die Reflexions-Mikrowellenschranke kann dazu eingerichtet sein, den Messwert durch die Messung der Dämpfung oder die Absorption eines Mikrowellensignals zu ermitteln.

Gemäß einer weiteren Ausführungsform ist der Sensor dazu eingerichtet, mittels der Befestigungseinrichtung außerhalb des Behälters an der Behälterwand befestigt zu sein. Der Sensor ist dazu eingerichtet, den Messwert durch die Behälterwand hindurch zu erfassen. Beispielsweise kann es sich bei einem kapazitiven Sensor oder einem Impedanzsensor, der außerhalb des Behälters angeordnet bzw. installiert ist, um einen berührungslosen und/oder nicht-invasiven Messsensor handeln, der dazu eingerichtet ist, eine Messgröße wie z.B. den Füllstand, den Grenzstand oder den Druck durch eine nichtmetallische Behälterwand bzw. eine Kunststoff-IBC-Behälter hindurch zu erfassen.

Beispielsweise kann der Behälter ein IBC (intermediate Bulk Container)-Behälter sein, durch dessen Wand hindurch das kapazitive Messfeld erzeugt werden kann.

Der kapazitive Sensor oder der Impedanzsensor kann oberhalb des Behälters oder seitlich an der Außenwand des Behälters angeordnet sein. Die Reflexions-Mikrowellenschranke kann seitlich an der Außenwand des Behälters angeordnet sein.

Gemäß einer weiteren Ausführungsform ist der Sensor dazu eingerichtet, mittels der Befestigungseinrichtung innerhalb des Behälters an der Behälterwand befestigt zu sein.

Beispielsweise kann es sich bei dem kapazitiven Sensor oder dem Impedanzsensor, der innerhalb des Behälters angeordnet bzw. installiert ist, um einen berührungslosen Messsensor oder einen medienberührenden Messsensor handeln.

Erfindungsgemäß weist die Befestigungseinrichtung zumindest einen Saugnapf auf, der dazu eingerichtet ist, mittels eines Unterdrucks innerhalb des zumindest einen Saugnapfes den Sensor an dem Behälter lösbar zu befestigen.

Erfindungsgemäß weist die Befestigungseinrichtung eine Spannvorrichtung auf, die zur Erzeugung des Unterdrucks innerhalb des zumindest einen Saugnapfes eingerichtet ist.

Die Spannvorrichtung kann beispielsweise ein Saugnapfhebel sein.

Gemäß einer weiteren Ausführungsform ist der Sensor in der Befestigungseinrichtung integriert ausgeführt.

Es kann vorgesehen sein, dass der Sensor kein Gehäuse aufweisen. Der Sensor kann derart in der Befestigungseinrichtung integriert ausgebildet sein, dass die Elektroden der zumindest einen Messelektrodenanordnung des Sensors unmittelbar an der Befestigungselektrode angeordnet sein.

Des Weiteren kann die Elektronik des Sensors und die Funkeinheit verteilt an der Befestigungseinrichtung angeordnet oder in der Befestigungseinrichtung integriert sein. Eine Antenne kann an der Befestigungseinrichtung vorgesehen bzw. auf der Außenseite der Befestigungseinrichtung angeordnet sein, mit der Funkeinheit verbunden sein und zum Senden des Funksignals der Funkeinheit eingerichtet sein.

Durch die Integration des Sensors in der Befestigungseinrichtung kann das Messgerät kompakt und flexibel einsetzbar ausgebildet sein. Somit kann der Sensor einfach und nachtäglich an dem Behälter wie z.B. einem IBC-Behälter angebracht werden.

Erfindungsgemäß ist die Befestigungseinrichtung dazu eingerichtet, durch die Schaltung der Spannvorrichtung den Sensor zu aktivieren oder deaktivieren.

Somit kann das Ein- und Ausschaltung der Schaltung der Befestigungseinrichtung jeweils mit der Aktivierung oder der Deaktivierung des Sensors gekoppelt sein.

Gemäß einer weiteren Ausführungsform weist der Sensor weiterhin ein Gehäuse auf, in dem die zumindest eine Messelektrodenanordnung mit den Messelektroden angeordnet ist.

Der Sensor kann als ein autarker Messsensor ausgebildet sein, der eine interne Energieversorgung wie z. B. eine Batterie, einen Akku, eine Solarzelle oder ein Energiegewinnungssystem aufweisen kann. Die interne Energieversorgung kann in dem Gehäuse angeordnet sein.

Alternativ oder zusätzlich kann der Sensor über ein Kabel mit einer externen Energieversorgung verbunden sein.

Des Weiteren kann der Sensor weiterhin eine Funkeinheit aufweisen, die in dem Gehäuse angeordnet oder integriert sein kann. Es kann vorgesehen sein, dass eine drahtlose Kommunikation mittels der Funkeinheit zwischen dem autarken Messsensor und einem externen Empfänger, der beispielsweise ein Computer, ein Datenzentrum oder ein Cloud-System sein kann, erfolgen. Im Vergleich zu einer drahtgebundenen Kommunikation, bei der die für die Messung erforderliche Energie stets im Einsatz stehen soll, kann mit der Verfügbarkeit weiterentwickelter, energiesparender drahtlosen Technologien in zunehmendem Umfang batteriebetriebene Sensoren zur Überwachung von Füllstand-, Grenzstand- oder Druckwerten an Bedeutung gewinnen. Besondere Vorteile ergeben sich für Anwendungen im Bereich der Prozessautomatisierung im industriellen Umfeld wie z. B. der Logistik.

Unter dem Begriff "Prozessautomatisierung im industriellen Umfeld" kann ein Teilgebiet der Technik verstanden werden, welches alle Maßnahmen zum Betrieb von Maschinen und Anlagen ohne Mitwirkung des Menschen beinhaltet. Ein Ziel der Prozessautomatisierung ist es, das Zusammenspiel einzelner Komponenten einer Werksanlage in den Bereichen Chemie, Lebensmittel, Pharma, Erdöl, Papier, Zement, Schifffahrt oder Bergbau zu automatisieren. Hierzu können eine Vielzahl an Sensoren eingesetzt werden, welche insbesondere an die spezifischen Anforderungen der Prozessindustrie, wie bspw. mechanische Stabilität, Unempfindlichkeit gegenüber Verschmutzung, extremen Temperaturen und extremen Drücken, angepasst sind. Messwerte dieser Sensoren werden üblicherweise an eine Leitwarte übermittelt, in welcher Prozessparameter wie Füllstand, Grenzstand, Durchfluss, Druck oder Dichte überwacht und Einstellungen für die gesamte Werksanlage manuell oder automatisiert verändert werden können.

Ein Teilgebiet der Prozessautomatisierung im industriellen Umfeld betrifft die Logistikautomation. Mit Hilfe von Distanz- und Winkelsensoren werden im Bereich der Logistikautomation Abläufe innerhalb eines Gebäudes oder innerhalb einer einzelnen Logistikanlage automatisiert. Typische Anwendungen finden z.B. Systeme zur Logistikautomation im Bereich der Gepäck- und Frachtabfertigung an Flughäfen, im Bereich der Verkehrsüberwachung (Mautsysteme), im Handel, der Paketdistribution oder aber auch im Bereich der Gebäudesicherung (Zutrittskontrolle). Gemeint ist den zuvor aufgezählten Beispielen, dass eine Präsenzerkennung in Kombination mit einer genauen Vermessung der Größe und der Lage eines Objektes von der jeweiligen Anwendungsseite gefordert wird. Hierfür können Sensoren auf Basis optischer Messverfahren mittels Laser, LED, 2D-Kameras oder 3D-Kameras, die nach dem Laufzeitprinzip (time of flight, ToF) Abstände erfassen, verwendet werden.

Ein weiteres Teilgebiet der Prozessautomatisierung im industriellen Umfeld betrifft die Fabrik-/Fertigungsautomation. Anwendungsfälle hierzu finden sich in den unterschiedlichsten Branchen wie Automobilherstellung, Nahrungsmittelherstellung, Pharmaindustrie oder allgemein im Bereich der Verpackung. Ziel der Fabrikautomation ist, die Herstellung von Gütern durch Maschinen, Fertigungslinien und/oder Roboter zu automatisieren, d. h. ohne Mitwirkung des Menschen ablaufen zu lassen. Die hierbei verwendeten Sensoren und spezifischen Anforderungen im Hinblick auf die Messgenauigkeit bei der Erfassung der Lage und Größe eines Objektes sind mit denen der im vorigen Beispiel der Logistikautomation vergleichbar.

Beispielsweise kann durch die fortlaufende, automatisierte Überwachung der Füllstände in mobilen Behältern und die vorzugsweise drahtlose Übertragung der Werte an eine zentrale Auswertestelle im Bereich der Warenlogistik eine standortübergreifende Bestandsverwaltung auf einfache Art und Weise realisiert werden. Unter Verwendung der erfassten Daten können in Abhängigkeit von der jeweiligen Problemstellung signifikante Kostenreduktionen erreicht werden, wenn beispielsweise die Fahrroute für Lieferfahrzeuge zur Versorgung mit Nachschub optimiert werden kann.

Der autarke Messsensor kann weiterhin einen Zeitgeber, eine Logikschaltung, angeordnet zwischen dem Zeitgeber der Auswerteeinheit, und ein schaltendes Element, eingerichtet zum Verbinden der Energieversorgung, der Logikschaltung und der Auswerteeinheit, aufweisen. Darüber hinaus kann vorgesehen sein, dass eine Auswerteeinheit oder ein Prozessor ein Selbsthaltesignal zum Aktivieren der Energieversorgung einrichten kann.

Die Elektronik, die Funkeinheit und die interne Energieversorgung können in dem Gehäuse angeordnet sein, um ein integriertes Messgerät zu bilden.

Gemäß einer weiteren Ausführungsform weist die Befestigungseinrichtung zwei Saugnäpfe auf, zwischen denen der Sensor angeordnet ist und die mittels des Gehäuses mit dem Sensor verbunden sind.

Es kann vorgesehen sein, dass die zwei oder mehr Saugnäpfe mit dem Sensor integral ausgebildet sein können. Des Weiteren kann der Sensor mittels der zwei Saugnäpfe an dem Behälter bzw. an der Behälterwand installiert oder festmontiert sein.

Im Vergleich mit dem Messgerät mit zwei Saugnäpfen kann das Messgerät mit einem einzigen Saugnapf einen kompakteren und flexibler einsetzbaren Aufbau auf.

Gemäß einer weiteren Ausführungsform weist die Befestigungseinrichtung weiterhin einen Adapter auf, der eingerichtet ist, zwischen dem zumindest einem Saugnapf und der Behälterwand angeordnet zu sein, mittels der Spannvorrichtung an den Behälter gepresst zu werden und die zumindest eine Messelektrodenanordnung des Sensors dicht an der Behälterwand anzubringen.

Der Adapter der Befestigungseinrichtung kann weiterhin ein Dichtungselement aufweisen, das beispielsweise aus einem Kunststoff bzw. einem Elastomer bestehen kann. Beispielsweise kann der Adapter eine Gummimembran aufweisen. Die zwei Elektroden der zumindest einen Messelektrodenanordnung können auf der von dem Behälter abgewandten Seite der Gummimembran oder direkt hinter der Gummimembran im äußeren Bereich, wo die Gummimembran flach an den Behälter gepresst werden kann, angeordnet sein. Es kann vorteilhaft sein, dass die Elektroden nach der Befestigung sehr dicht an dem Behälter angeordnet sein können und gleichzeitig nicht außen liegen, sondern von der Gummimembran geschützt werden können.

Es kann vorgesehen sein, dass der Adapter eingerichtet sein kann, zwischen einem nicht-montierten Zustand und einem montierten Zustand umschaltbar zu sein. In dem montierten Zustand kann der Saugnapf oder der Adapter angespannt ausgestaltet sein, damit das Dichtungselement dicht an der Behälterwand angeordnet sein kann und der Unterdruck oder Vakuum innerhalb des Saugnapfes herrschen kann.

Somit kann die Ein- und/oder Ausschaltung der Spannvorrichtung mit der Umschaltung des Adapters zwischen dem nicht-montierten Zustand und dem montierten Zustand derart gekoppelt sein, dass der Adapter bei der Einschaltung der Spannvorrichtung in den montierten Zustand gespannt sein kann, das Dichtungselement des Adapters dicht an dem Behälter bzw. der Behälterwand gepresst werden kann, und der Unterdruck in dem Saugnapf herrschen kann. Dagegen kann der Adapter bei der Ausschaltung der Spannvorrichtung in den nicht-montierten Zustand nicht gespannt sein und ein Normaldruck herrschen, der gleich groß wie der Umgebungsdruck ist.

Es kann vorgesehen sein, dass das Einschalten der Spannvorrichtung und das Einspannen des Adapters in dem montierten Zustand unabhängig von dem Erzeugen des kapazitiven Messfeldes der zumindest einen Messelektrodenanordnung und somit unabhängig von dem Messen mittels des Messgeräts durchgeführt werden können.

Alternativ oder zusätzlich kann die Befestigungseinrichtung des Messgeräts dazu eingerichtet sein, durch die Schaltung der Spannvorrichtung den Sensor zu aktivieren oder deaktivieren. Dazu können beispielsweise das Erzeugen des kapazitiven Messfeldes und das Messen mittels des Messgeräts mit dem Einschalten der Spannvorrichtung und das Einspannen des Adapters in den montierten Zustand gekoppelt werden.

Beispielsweise kann das Messgerät mit dem kapazitiven Sensor oder dem Impedanzsensor dazu eingerichtet sein, durch die kapazitive Messung oder Impedanzspektroskopie zu detektieren, ob der Behälter leer ist oder voll mit einem Medium oder einem Füllgut befüllt ist, und/oder ob der Sensor an dem Behälter montiert ist. Beispielsweise kann das Messgerät mit dem kapazitiven Messsensor keine Messung initiieren oder nur die Kapazität der Luft messen, wenn sich das Messgerät in dem nicht-montierten Zustand befindet. Befindet sich das Messgerät in dem montierten Zustand, kann das Messgerät bei dem leeren Behälter die Kapazität des Kunststoff-Behälters messen, während das Messgerät bei dem vollen oder befüllten Behälter die Kapazität des Mediums oder Füllguts messen kann.

Es kann vorgesehen sein, dass der Sensor des Messgeräts durch die Spannvorrichtung aktiviert oder deaktiviert werden kann, um die Batterielaufzeit der internen Energieversorgung zu maximieren.

Mittels des zumindest einen Saugnapfes der Befestigungseinrichtung kann das Messgerät oder der Messsensor einfach, schnell und auch nachträglich zur Füllstandmessung, Grenzstandmessung oder Druckmessung an einem Behälter installiert werden. Insbesondere kann das Messgerät durch die integrierte Ausbildung des Sensors in der Befestigungseinrichtung sehr kompakt ausgebildet sein und daher auch für einen kleinen Behälter oder den Behälter mit einer begrenzten ebenen Fläche der Behälterwand verwendet werden. Des Weiteren kann es vorteilhaft sein, dass das Messgerät mit dem zumindest einen Saugnapf als Befestigungseinrichtung von dem Behälter lösbar ausgeführt sein kann, so dass das Messgerät flexibel an mehreren Schaltpunkten oder Schaltstellen an dem Behälter bzw. der Behälterwand wieder schnell und einfach montiert werden kann.

Ein weiterer Aspekt betrifft die Verwendung eines Messgeräts zur Füllstandmessung, Grenzstandmessung oder Druckmessung in einem Behälter.

Alternativ kann beispielsweise das Messgerät mit mehreren Saugnäpfen als Befestigungseinrichtung auch für die kapazitive kontinuierliche Füllstandmessung genutzt werden.

Ein weiterer Aspekt betrifft die Verwendung eines Messgeräts für ein Bestandsmanagement eines Behälters in einer Prozessanlage.

Daraus kann sich ein effizientes Bestandsmanagementsystem eines Behälters in einer Prozessanlage ergeben. Beispielsweise kann es möglich sein, dass der Sensor an einer ersten Schaltstelle, gekennzeichnet mit einem Low Alarm, der Behälterwand montiert sein und danach durch das Lösen und die neue Befestigung an einer zweiten Schaltstelle, gekennzeichnet mit einem Low Low Alarm, der Behälterwand wieder montiert sein.

Alternativ oder zusätzlich kann das Messgerät für die Vorratsplanung einer Prozessanlage mit einem Behälter dynamisch an den aktuellen Verbrauch oder an die Saison angepasst werden.

Im Folgenden werden mit Verweis auf die Figuren Ausführungsformen der vorliegenden Offenbarung beschrieben. Werden in der Figurenbeschreibung die gleichen Bezugszeichen verwendet, so beschreiben diese gleiche oder ähnliche Elemente. Die Darstellungen in den Figuren sind schematisch und nicht maßstäblich.

Kurze Beschreibung der Figuren
- Fig. 1: zeigt schematisch ein Messgerät zur Füllstandmessung, Grenzstandmessung oder Druckmessung in einem Behälter gemäß einer Ausführungsform.
- Fig. 2a: zeigt schematisch ein Messgerät mit einer Befestigungseinrichtung gemäß einer Ausführungsform.
- Fig. 2b: zeigt schematisch ein Messgerät mit einer Befestigungseinrichtung gemäß einer weiterer Ausführungsform.
- Fig. 3a: zeigt schematisch eine Anordnung eines Messgeräts an einem Behälter gemäß einer Ausführungsform.
- Fig. 3b: zeigt schematisch eine Anordnung eines Messgeräts an einem Behälter gemäß einer Ausführungsform.
- Fig. 3c: zeigt schematisch eine Anordnung eines Messgeräts an einem Behälter gemäß einer Ausführungsform.

### Detaillierte Beschreibung von Ausführungsformen

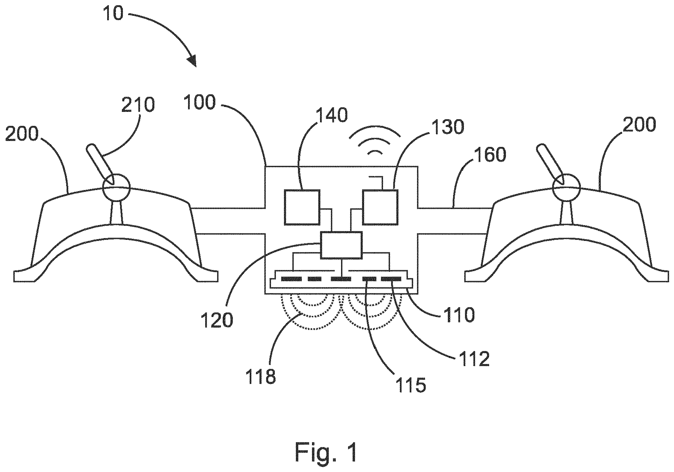

Fig. 1 zeigt schematisch ein Messgerät 10, das für eine Füllstandmessung, eine Grenzstandmessung oder eine Druckmessung in einem Behälter 50 eingerichtet ist. Der Messgerät 10 umfasst einen Sensor 100, eingerichtet zum Erfassen eines Messwertes, und eine Befestigungseinrichtung 200, an der der Sensor 100 angeordnet und/oder befestigt ist. Die Befestigungseinrichtung 200 ist dazu eingerichtet, den Sensor 100 lösbar an einer ebenen Fläche einer Behälterwand 55 anzubringen.

Der Sensor 100 des Messgeräts 10 kann ein kapazitiver Sensor sein. Alternativ kann der Sensor 100 beispielsweise ein Impedanzsensor oder eine Reflexions-Mikrowellenschranke sein.

Beispielsweise kann der kapazitive Sensor 100 zumindest eine Messelektrodenanordnung 110 mit Elektroden 112 aufweisen, die voneinander beabstandet angeordnet sein können. Beispielsweise kann der kapazitive Sensor 100 drei Elektroden 112, wie in Fig. 1 gezeigt, aufweisen. Es kann vorgesehen sein, dass der mittlere Elektrode 112 eine Grundelektrode bzw. GND-Elektrode sein kann, die als eine gemeinsame Gegenelektrode gegenüber den anderen Elektroden ausgebildet sein kann. Das Messgerät 10 kann dazu eingerichtet sein, mittels der Elektroden 112 der zumindest einer Messelektrodenanordnung 110 zumindest ein kapazitives Messfeld 118 oder Wirkfeld zum Erfassen der Messgröße, wie z. B. eines Füllstands, eines Grenzstands oder eines Druckwertes, zu erzeugen.

Ferner kann der kapazitive Sensor 100 weiterhin zumindest eine Schirmelektrode 115 aufweisen, die zwischen zwei benachbarten Elektroden 112 der zumindest einen Messelektrodenanordnung 110 angeordnet sein kann. Durch das Vorsehen der zumindest einer Schirmelektrode 115 kann der kapazitive Sensor 110 beispielsweise von Einflüssen auf die Messergebnisse durch eine äußere Störung befreit oder zumindest verhindert werden.

Der Sensor 100 weist weiterhin eine Elektronik 120, eine interne Energieversorgung 140 und eine Funkeinheit 130 auf. Die interne Energieversorgung 140 kann beispielsweise eine Batterie, einen Akku oder eine Solarzelle sein. Die Funkeinheit 130 kann dazu eingerichtet sein, die Messdaten bzw. die Messgröße mittels eines Funksignals drahtlos an einen externen Empfänger, wie z. B. ein Computer, ein Datenzentrum oder ein Cloud-System zu senden oder übertragen. Die Elektronik 120 kann dazu eingerichtet sein, die zumindest eine Messelektrodenanordnung 110, die Funkeinheit 130 und die interne Energieversorgung 140 zu steuern.

Der Sensor 100 in Fig. 1 weist weiterhin ein Gehäuse 160 auf, in dem die zumindest eine Messelektrodenanordnung 110 mit den Elektroden 120 angeordnet ist. Darüber hinaus können die die Elektronik 120, die Funkeinheit 130 und die interne Energieversorgung 140 integriert in dem Gehäuse 160 angeordnet sein.

Die Befestigungseinrichtung 200 des Messgeräts 10 kann zumindest einen Saugnapf aufweisen, der dazu eingerichtet ist, mittels eines Unterdrucks innerhalb des zumindest einen Saugnapfes den Sensor 100 an dem Behälter 50 bzw. an der Behälterwand 55 lösbar zu befestigen.

In Fig. 1 weist die Befestigungseinrichtung 200 des Messgeräts 10 zwei Saugnäpfe auf, zwischen denen der Sensor 110 angeordnet ist und die mittels des Gehäuses 160 mit dem Sensor 110 verbunden ist. Der Sensor 110 kann mit der Befestigungseinrichtung 200 integral ausgebildet sein. Der Sensor 110 ist zwischen den zwei Saugnäpfe der Befestigungseinrichtung 200 angeordnet und durch die zwei Saugnäpfe an dem Behälter 50 bzw. der Behälterwand 55 installiert.

Weiterhin weist die Befestigungseinrichtung 200 eine Spannvorrichtung 210 auf, die zur Erzeugung des Unterdrucks innerhalb des zumindest einen Saugnapfes eingerichtet ist. Die Spannvorrichtung 210 kann beispielsweise ein Saugnapfhebel sein.

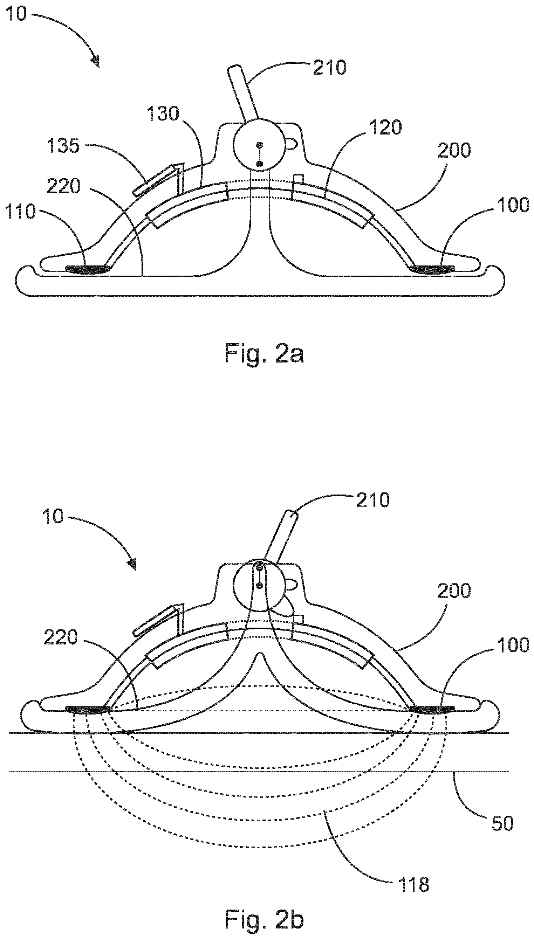

Alternativ zeigen Fig. 2a und Fig. 2b, dass die Befestigungseinrichtung 200 des Messgeräts 10 einen Saugnapf aufweisen, in dem der Sensor 100 integriert sein kann. Dazu weist der Sensor 100 in Fig. 2a und Fig. 2b im Gegensatz zu dem Sensor in Fig. 1 kein Gehäuse auf. Die zumindest eine Messelektrodenanordnung 110 weist zwei Elektroden, die jeweils an einem dem Behälter 50 zugewandten Ende des Saugnapfes angeordnet sind.

Die Elektronik 120 und die Funkeinheit 130 können an dem Saugnapf verteilt vorgesehen oder angeordnet sein. Es kann vorgesehen sein, dass in der Elektronik 120 die interne Energieversorgung wie z.B. eine Batterie integriert ist.

Des Weiteren kann das Messgerät 10 bzw. der Sensor 100 eine Antenne 135 an dem Saugnapf der Befestigungseinrichtung 200 aufweisen. Die Antenne kann auf der Außenseite der Befestigungseinrichtung oder des Saugnapfes vorgesehen sein und durch den Saugnapf hindurch mit der Funkeinheit 130 verbunden sein, um das Funksignal der Funkeinheit 130 nach außen zu senden.

Durch die Integration des Sensors 100 in der Befestigungseinrichtung 200 kann das Messgerät kompakt und flexibel einsetzbar ausgebildet sein. Somit kann der Sensor 100 einfach und nachtäglich an einen Behälter 50 wie z.B. einen IBC-Behälter angebracht werden.

Die Befestigungseinrichtung 200 weist weiterhin einen Adapter 220 auf, der eingerichtet ist, zwischen dem Saugnapf und der Behälterwand 55 angeordnet zu sein, mittels der Spannvorrichtung 210 an den Behälter 50 gepresst zu werden und die zumindest eine Messelektrodenanordnung 110 des Sensors dicht an der Behälterwand 55 anzubringen.

Der Adapter 220 kann ein Dichtungselement aufweisen, das beispielsweise aus einem Kunststoff bzw. einem Elastomer bestehen kann. Beispielsweise kann der Adapter 220 eine Gummimembran aufweisen.

Die zwei Elektroden der zumindest einen Messelektrodenanordnung 110 sind auf der von dem Behälter abgewandten Seite der Gummimembran oder direkt hinter der Gummimembran im äußeren Bereich angeordnet, wo die Gummimembran flach an den Behälter 50 gepresst wird. Es kann vorteilhaft sein, dass die Elektroden nach der Befestigung sehr dicht an dem Behälter angeordnet sein können und gleichzeitig nicht außen liegen, sondern von der Gummimembran geschützt werden können.

Der Adapter 220 kann eingerichtet sein, zwischen einem nicht-montierten Zustand und einem montierten Zustand umgeschaltet werden zu können. In dem montierten Zustand kann der Saugnapf bzw. der Adapter 220 angespannt ausgestaltet sein, damit das Dichtungselement dicht an der Behälterwand gepresst werden kann und der Unterdruck oder Vakuum innerhalb des Saugnapfes herrschen kann.

Somit kann die Ein- und/oder Ausschaltung der Spannvorrichtung 210 mit der Umschaltung des Adapters 220 zwischen dem nicht-montierten Zustand und dem montierten Zustand und/oder derart gekoppelt sein, dass bei der Einschaltung der Spannvorrichtung 210 der Adapter 220 in den montierten Zustand gespannt sein kann, dass das Dichtungselement des Adapters 220 dicht an dem Behälter 50 bzw. der Behälterwand 55 gepresst werden kann, und dass der Unterdruck in dem Saugnapf herrschen kann. Dagegen kann der Adapter 220 bei der Ausschaltung der Spannvorrichtung 210 in den nicht-montierten Zustand nicht gespannt sein und ein Normaldruck herrschen, der gleich groß wie der Umgebungsdruck ist.

Es kann vorgesehen sein, dass das Einschalten der Spannvorrichtung 210 und das Einspannen des Adapters 220 in dem montierten Zustand unabhängig von dem Erzeugen des kapazitiven Messfeldes 118 der zumindest einen Messelektrodenanordnung 110 und somit unabhängig von der Messung mittels des Messgeräts 10 durchgeführt werden können.

Alternativ oder zusätzlich kann die Befestigungseinrichtung 200 des Messgeräts 10 dazu eingerichtet sein, durch die Schaltung der Spannvorrichtung 210 den Sensor 110 zu aktivieren oder deaktivieren. Dazu können beispielsweise das Erzeugen des kapazitiven Messfeldes 118 und die Messung mittels des Messgeräts 10 mit dem Einschalten der Spannvorrichtung 210 und das Einspannen des Adapters 220 in den montierten Zustand gekoppelt werden.

Es kann vorgesehen sein, dass der Sensor 100 des Messgeräts 10 durch die Spannvorrichtung 210 aktiviert oder deaktiviert werden kann, um die Batterielaufzeit der internen Energieversorgung 140 zu maximieren.

Die Befestigungseinrichtung 200 kann eingerichtet sein, den Sensor 100 derart lösbar an der ebenen Fläche der Behälterwand anzubringen, die keine Öffnung, Aussparung oder Einbuchtung zum Eingriff durch die Befestigungseinrichtung aufweist. Somit kann sich bei dem kapazitiven Sensor 100 des Messgeräts 10 um einen berührungslosen und nicht-invasiven kapazitiven Messsensor handeln.

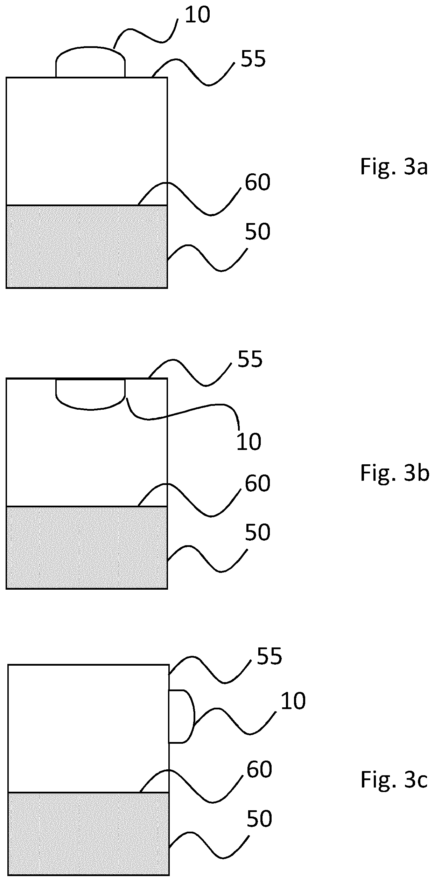

Das Messgerät 10 kann mittels der Befestigungseinrichtung 200 außerhalb des Behälters 50 an der Behälterwand 55 befestigt sein. Beispielsweise kann das Messgerät 10 oberhalb des Behälters 50, wie in Fig. 3a gezeigt, zur Füllstandmessung angeordnet sein. Dazu kann der Sensor 100 eingerichtet sein, den Messwert oder die Messgröße durch die Behälterwand 55 hindurch zu erfassen.

Beispielsweise kann das Messgerät 10, wie in Fig. 3c gezeigt, als eine Reflexions-Mikrowellenschranke seitlich außerhalb des Behälters 50 und an der Behälterwand 55 angeordnet sein, um z.B. den Füllstand oder den Grenzstand eines Füllguts 60 oder eines Mediums in dem Behälter 50 zu erfassen. Daraus kann sich ein effizientes Bestandsmanagementsystem eines Behälters in einer Prozessanlage ergeben. Beispielsweise kann es möglich sein, dass der Sensor 100 an einer ersten Schaltstelle, gekennzeichnet mit einem Low Alarm, der Behälterwand montiert sein kann und danach durch das Lösen und die neue Befestigung an einer zweiten Schaltstelle, gekennzeichnet mit einem Low Low Alarm, der Behälterwand wieder montiert sein kann. Alternativ oder zusätzlich kann das Messgerät für die Vorratsplanung einer Prozessanlage mit einem Behälter flexibel an den aktuellen Verbrauch oder an die Saison angepasst werden.

Alternativ zeigt Fig. 3b, dass das Messgerät 10 mittels der Befestigungseinrichtung 200 innerhalb des Behälters 50 befestigt sein kann.

Das heißt, dass die Installation des Messgeräts 10 auch in dem Behälter erfolgen kann. Somit kann der Messsensor 100 mittels des Saugnapfes der Befestigungseinrichtung 200 innerhalb des Behälters 50 angebracht werden.

Beispielsweise kann das Messgerät 10, wie z. B. ein Druckmessgerät, mit einem autarken Messsensor eingerichtet sein, den Messwert wie z.B. einen Druckwert mittels der Funkeinheit 130 per Funk durch die Behälterwand eines IBC-Behälters hindurch nach außen an einem Empfänger auszusenden. Bei einem metallischen Behälter 50 kann das Aussenden des Messwertes bzw. des Druckwertes des Messgeräts 10 mit dem autarken Sensor 100 mittels einer funktechnischen Öffnung, die an der Behälterwand vorgesehen ist, erfolgen.

Mittels des zumindest einen Saugennapfes der Befestigungseinrichtung 200 kann das Messgerät 10 bzw. der Messsensor 100 einfach, schnell und auch nachträglich für die Füllstandmessung, Grenzstandmessung oder Druckmessung an einem Behälter installiert werden. Insbesondere kann das Messgerät durch die integrierte Ausbildung des Sensors 100 in der Befestigungseinrichtung 200 sehr kompakt ausgebildet sein und daher auch für einen kleinen Behälter oder den Behälter mit einer begrenzten ebenen Fläche der Behälterwand verwendet werden. Des Weiteren kann es vorteilhaft sein, dass das Messgerät 10 mit dem zumindest einen Saugnapf als Befestigungseinrichtung 200 von dem Behälter lösbar ausgeführt sein kann, so dass das Messgerät 10 flexibel an mehreren Schaltpunkten oder Schaltstellen an dem Behälter 50 bzw. der Behälterwand 55 wieder schnell und einfach montiert werden kann.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Messgerät (10), eingerichtet für eine Füllstandmessung, eine Grenzstandmessung oder eine Druckmessung in einem Behälter (50), umfassend:
einen Sensor (100), der zum Erfassen eines Messwertes eingerichtet ist; und
eine Befestigungseinrichtung (200), an der der Sensor (100) angeordnet und/oder befestigt ist;
wobei die Befestigungseinrichtung dazu eingerichtet ist, den Sensor lösbar an einer ebenen Fläche einer Behälterwand (55) anzubringen;
wobei die Befestigungseinrichtung (200) zumindest einen Saugnapf aufweist, der dazu eingerichtet ist, mittels eines Unterdrucks innerhalb des zumindest einen Saugnapfes den Sensor (100) an dem Behälter lösbar zu befestigen;
wobei die Befestigungseinrichtung (200) eine Spannvorrichtung (210) aufweist, die zur Erzeugung des Unterdrucks innerhalb des zumindest einen Saugnapfes eingerichtet ist;
**dadurch gekennzeichnet, dass**
die Befestigungseinrichtung (200) dazu eingerichtet ist, durch die Schaltung der Spannvorrichtung (210) den Sensor (100) zu aktivieren oder deaktivieren.

2. Messgerät (10) nach Anspruch 1,
wobei die Befestigungseinrichtung (200) dazu eingerichtet ist, den Sensor lösbar an einer ebenen Fläche der Behälterwand (55) anzubringen, die keine Öffnung, Aussparung oder Einbuchtung zum Eingriff durch die Befestigungseinrichtung aufweist.

3. Messgerät (10) nach Anspruch 1 oder 2,
wobei der Sensor (100) ein kapazitiver Sensor oder ein Impedanzsensor ist.

4. Messgerät (10) nach Anspruch 3,
wobei der kapazitive Sensor zumindest eine Messelektrodenanordnung (110) mit Elektroden (112) aufweist;
wobei die Elektroden (112) der zumindest einen Messelektrodenanordnung (110) des kapazitiven Sensors voneinander beabstandet angeordnet ist.

5. Messgerät (10) nach Anspruch 3 oder 4,
wobei der kapazitive Sensor weiterhin zumindest eine Schirmelektrode (115) aufweist, die zwischen zwei benachbarten Elektroden (112) der zumindest einen Messelektrodenanordnung (110) angeordnet ist.

6. Messgerät (10) nach Anspruch 1,
wobei der Sensor (100) eine Reflexions-Mikrowellenschranke ist.

7. Messgerät (10) nach einem der vorhergehenden Ansprüche,
wobei der Sensor (100) eingerichtet ist, mittels der Befestigungseinrichtung (200) außerhalb des Behälters (50) an der Behälterwand (55) befestigt zu sein;
wobei der Sensor (100) eingerichtet ist, den Messwert durch die Behälterwand (55) hindurch zu erfassen.

8. Messgerät (10) nach einem der Ansprüche 1 bis 6,
wobei der Sensor (100) eingerichtet ist, mittels der Befestigungseinrichtung (200) innerhalb des Behälters (50) an der Behälterwand (55) befestigt zu sein.

9. Messgerät (10) nach einem der vorhergehenden Ansprüche,
wobei der Sensor (100) in der Befestigungseinrichtung (200) integriert ausgeführt ist.

10. Messgerät (10) nach Anspruch 4 oder 5,
wobei der Sensor (100) weiterhin ein Gehäuse (160) aufweist, in dem die zumindest eine Messelektrodenanordnung (110) mit den Messelektroden (112) angeordnet ist.

11. Messgerät (10) nach Anspruch 10,
wobei die Befestigungseinrichtung (200) zwei Saugnäpfe aufweist, zwischen denen der Sensor (100) angeordnet ist und die mittels des Gehäuses (160) mit dem Sensor (100) verbunden sind.

12. Messgerät (10) nach einem der vorhergehenden Ansprüche,
wobei die Befestigungseinrichtung (200) weiterhin einen Adapter (220) aufweist, der eingerichtet ist, zwischen dem zumindest einem Saugnapf und der Behälterwand (55) angeordnet zu sein, mittels der Spannvorrichtung (210) an den Behälter (50) gepresst zu werden und die zumindest eine Messelektrodenanordnung (110) des Sensors (100) dicht an die Behälterwand (55) anzubringen.

13. Verwendung eines Messgeräts (10) nach einem der Ansprüche 1 bis 11 zur Füllstandmessung, Grenzstandmessung oder Druckmessung in einem Behälter (50).

14. Verwendung eines Messgeräts (10) nach einem der Ansprüche 1 bis 11 für ein Bestandsmanagement eines Behälters (50) in einer Prozessanlage.

## Claims

1. Measuring device (10), configured for a fill level measurement, a limit level measurement or a pressure measurement in a container (50), comprising:
a sensor (100), which is configured to detect a measuring value; and
a fastening device (200), on which the sensor (100) is arranged and/or fastened;
wherein the fastening device is configured to releasably attach the sensor to a planar surface of a container wall (55);
wherein the fastening device (200) comprises at least one suction cup that is configured to detachably attach the sensor (100) to the container by means of an underpressure in the at least one suction cup;
wherein the fastening device (200) comprises a clamping device (210), which is configured to generate the underpressure in the at least one suction cup;
wherein the fastening device (200) is configured to activate or deactivate the sensor (100) by switching the clamping device (210).

2. Measuring device (10) according to claim 1,
wherein the fastening device (200) is configured to releasably attach the sensor to a planar surface of the container wall (55), which does not comprise an opening, a recess or an indentation for engagement by means of the fastening device.

3. Measuring device (10) according to claim 1 or 2,
wherein the sensor (100) is a capacitive sensor or an impedance sensor.

4. Measuring device (10) according to claim 3,
wherein the capacitive sensor comprises at least one measuring electrode arrangement (110) having electrodes (112);
wherein the electrodes (110) oft he at least one measuring electrode arrangement (110) of the capacitive sensor are arranged spaced apart from each other.

5. Measuring device (10) according to claim 3 or 4,
wherein the capacitive sensor further comprises at least one shield electrode (115) arranged between two adjacent electrodes (112) of the at least one measuring electrode assembly (110).

6. Measuring device (10) according to claim 1,
wherein the sensor (100) is a reflection microwave barrier.

7. Measuring device (10) according to one of the preceding claims,
wherein the sensor (100) is configured to be attached to the container wall (55) outside the container (50) by means of the fastening device (200);
wherein the sensor (100) is configured to detect the measuring value through the container wall (55).

8. Measuring device (10) according to one of claims 1 to 6,
wherein the sensor (100) is configured to be attached to the container wall (55) within the container (50) by means of the fastening device (200).

9. Measuring device (10) according to one of the preceding claims,
wherein the sensor (100) is integrated in the fastening device (200).

10. Measuring device (10) according to claim 4 or 5,
wherein the sensor (100) further comprises a housing (160), in which the at least one measuring electrode arrangement (110) is arranged with the measuring electrodes (112).

11. Measuring device (10) according to claim 10,
wherein the fastening device (200) comprises two suction cups, between which the sensor (100) is arranged, and which are connected to the sensor (100) by means of the housing (160).

12. Measuring device (10) according to one of the preceding claims,
wherein the fastening device (200) further comprises an adapter (220), which is configured to be arranged between the at least one suction cup and the container wall (55), to be pressed against the container (50) by means of the clamping device (210), and to tightly attach the at least one measuring electrode assembly (110) of the sensor (100)to the container wall (55).

13. Use of a measuring device (10) according to one of claims 1 to 11 for a fill level measurement, a limit level measurement or a pressure measurement in a container (50).

14. Use of a measuring device (10) according to one of claims 1 to 11 for an inventory management of a container (50) in a process plant.

## Revendications

1. Appareil de mesure (10), configuré pour une mesure de niveau de remplissage, une mesure de niveau de seuil ou une mesure de pression dans un récipient (50), comprenant :
un capteur (100) configuré pour détecter une valeur mesurée ; et
un dispositif de fixation (200) sur lequel le capteur (100) est agencé et/ou fixé ;
dans lequel le dispositif de fixation est configuré pour appliquer le capteur de manière amovible sur une surface plane d'une paroi de récipient (55) ;
dans lequel le dispositif de fixation (200) comporte au moins une ventouse qui est configurée pour fixer le capteur (100) de manière amovible sur le récipient au moyen d'une dépression à l'intérieur de la au moins une ventouse ;
dans lequel le dispositif de fixation (200) comporte un dispositif de serrage (210) qui est configuré pour générer la dépression à l'intérieur de la au moins une ventouse ;
**caractérisé en ce que** le dispositif de fixation (200) est configuré pour activer ou désactiver le capteur (100) par la commutation du dispositif de serrage (210).

2. Appareil de mesure (10) selon la revendication 1,
dans lequel le dispositif de fixation (200) est configuré pour appliquer le capteur de manière amovible sur une surface plane de la paroi de récipient (55) qui ne comporte aucune ouverture, cavité ou encoche de prise par le dispositif de fixation.

3. Appareil de mesure (10) selon la revendication 1 ou 2, dans lequel le capteur (100) est un capteur capacitif ou un capteur d'impédance.

4. Appareil de mesure (10) selon la revendication 3,
dans lequel le capteur capacitif comporte au moins un ensemble d'électrodes de mesure (110) avec des électrodes (112) ;
dans lequel les électrodes (112) du au moins un ensemble d'électrodes de mesure (110) du capteur capacitif sont agencées de manière espacée les unes des autres.

5. Appareil de mesure (10) selon la revendication 3 ou 4, dans lequel le capteur capacitif comporte en outre au moins une électrode écran (115) qui est agencée entre deux électrodes (112) adjacentes du au moins un ensemble d'électrodes de mesure (110).

6. Appareil de mesure (10) selon la revendication 1,
dans lequel le capteur (100) est une barrière hyperfréquence à réflexion.

7. Appareil de mesure (10) selon l'une des revendications précédentes,
dans lequel le capteur (100) est configuré pour être fixé à l'extérieur du récipient (50) sur la paroi de récipient (55), au moyen du dispositif de fixation (200) ;
dans lequel le capteur (100) est configuré pour détecter la valeur mesurée à travers la paroi de réservoir (55).

8. Appareil de mesure (10) selon l'une des revendications 1 à 6,
dans lequel le capteur (100) est configuré pour être fixé à l'intérieur du récipient (50) sur la paroi de récipient (55), au moyen du dispositif de fixation (200).

9. Appareil de mesure (10) selon l'une des revendications précédentes,
dans lequel le capteur (100) est réalisé de manière intégrée dans le dispositif de fixation (200).

10. Appareil de mesure (10) selon la revendication 4 ou 5,
dans lequel le capteur (100) comporte en outre un boîtier (160), dans lequel le au moins un ensemble d'électrodes de mesure (110) est agencé avec les électrodes de mesure (112).

11. Appareil de mesure (10) selon la revendication 10,
dans lequel le dispositif de fixation (200) comporte deux ventouses entre lesquelles est agencé le capteur (100) et qui sont reliées au capteur (100) au moyen du boîtier (160).

12. Appareil de mesure (10) selon l'une des revendications précédentes,
dans lequel le dispositif de fixation (200) comporte en outre un adaptateur (220) qui est configuré pour être agencé entre la au moins une ventouse et la paroi de récipient (55), pour être pressé contre le récipient (50) au moyen du dispositif de serrage (210) et pour appliquer le au moins un ensemble d'électrodes de mesure (110) du capteur (100) de manière étanche sur la paroi de récipient (55).

13. Utilisation d'un appareil de mesure (10) selon l'une des revendications 1 à 11 pour mesurer un niveau de remplissage, mesurer un niveau de seuil ou mesurer une pression dans un récipient (50).

14. Utilisation d'un appareil de mesure (10) selon l'une des revendications 1 à 11 pour une gestion de stock d'un récipient (50) dans une installation de processus.
